# EUROPEAN PATENT SPECIFICATION

(11) **EP 2 500 123 B1**
(45) Date of publication and mention of the grant of the patent: **08.03.2023**
(21) Application number: 10809231.3
(22) Date of filing: 25.10.2010
(51) Int. Cl.: B23B 7/12

(54) **PORCELAIN LAMINATE AND ITS MANUFACTURING PROCESS**
PORZELLANLAMINAT UND SEIN HERSTELLUNGSVERFAHREN
STRATIFIÉ PORCELAINIQUE ET SON PROCÉDÉ DE FABRICATION

(30) Priority: 11.11.2009 ES 200902148; 17.12.2009 ES 200901717 U
(43) Date of publication of application: 19.09.2012
(73) Proprietor: Lloveras Calvo, Juan, Barcelona (ES)
(72) Inventor: Lloveras Calvo, Juan, Barcelona (ES)
(74) Representative: Curell Suñol S.L.P.
(86) International application number: PCT/ES2010/070684
(87) International publication number: WO 2011/058205

(56) References cited:
- EP-A1- 1 555 119
- EP-A1- 1 977 890
- WO-A2-2007/099572
- WO-A2-2008/047219
- AU-B4- 2002 101 029
- DE-A1- 10 229 984
- DE-U1-202006 015 903
- DE-U1-202006 016 106
- ES-A1- 2 338 625
- ES-U- 1 058 248
- ES-U- 1 067 681
- ES-U- 1 071 911
- IT-A1- BO20 090 148
- NL-C2- 1 035 966
- US-A1- 2004 213 946
- Laminam: "ESTERNA", , 1 September 2010 (2010-09-01), XP055695715, Retrieved from the Internet: URL:http://www.bloxo.pl/file/files/spieki- katalogi/LAMINAM%20Esterna.pdf [retrieved on 2020-05-14]
- Javier Rodríguez: "Tau lanza un porcelánico de 5 mm de espesor para crecer en rehabilitación - Noticias de Construcción en Alimarket, información económica sectorial", , 6 October 2009 (2009-10-06), XP055695961, Retrieved from the Internet: URL:https://www.alimarket.es/construccion/ noticia/16797/tau-lanza-un-porcelanico-de- 5-mm-de-espesor-para-crecer-en-rehabilitac ion [retrieved on 2020-05-15]

## Description

### OBJECT OF THE INVENTION

The object of the present invention is a porcelain laminate as well as the process for manufacturing said porcelain laminate, wherein the laminate is formed by a thin sheet of porcelain stoneware that is joined at least to one support sheet or laminate. The claimed invention is defined in the attached claims.

This invention is characterised by the nature of the materials that are combined, the thinness of the layer of porcelain stoneware, as well as the fact of placing the layers of different materials in a combined manner, which produces a laminate that has a synergic effect for the characteristic features of each of the combined layers.

Therefore, this invention is limited within the scope of laminates and specifically that of laminates that have one of their layers of ceramic or porcelain stonewares.

This invention is also characterised by the specific actions and steps that each of the layers forming the laminate must be subjected to in order to fix them in a resistant and stable manner.

### BACKGROUND OF THE INVENTION

Porcelain stonewares are characterised in that they are materials with very low absorption of water, dry pressed, not enamelled and subjected to a single firing. The fact that they are materials of low porosity favours a very low absorption of water, of 0.1%. As a result, porcelain stoneware achieves compact, non-slip parts that are very resistant to chemical agents, cleaning products and abrasion. Its hardness makes it an excellent material for outdoor coverings in cold or very busy areas.

On the other hand, they are very resistant to sudden temperature changes, impact and wear, as well as being a very hygienic material: their low water and dirt retention make them a difficult place for bacteria to accumulate in kitchens and bathrooms, although they can also be used in swimming pools and facilities in which hygiene is of the essence.

The use of porcelain stonewares, despite their good qualities, is limited by several factors, on the one hand their high cost, since they are undoubtedly the most expensive materials used for coatings, on the other hand their relatively high weight, which limits their use on large wall coverings, and also the fact that their use is limited to parts with relative dimensions, which usually do not exceed 60 cm x 60 cm.

They also have some features that can still be improved upon, such as both their thermal and sound insulation and their little capacity for bending.

It is therefore the object of the present invention to develop a laminate that, on the one hand, overcomes the limitations of price, weight and dimensions and that improves aspects such as the thermal and sound insulation and the resistance to bending, developing a laminate such as the one object of the invention.

We currently know the possibility of manufacturing thin porcelain sheets, about 3 mm thick, however, these sheets are not used by themselves, but assembled together and joined to other sheets of the same thickness in order to have sufficient structural strength, since they would otherwise be quite fragile for handling, assembly and even during their useful life in the event of being stuck on a pace and mounted on the floor, since a simple blow could fracture the porcelain stoneware.

Said assemblies formed by three sheets of porcelain stoneware with a thickness of about 3 mm additionally have another difficulty that is the fact that when they require specialised machinery for machining, and therefore requires taking it to a marble worker.

It is known in the state of the art the following documents:
- US2004213946 which discloses a hard surface-veneer engineered surfacing tiles and methods
- DE202006016106 which discloses a work surface that comprises two ceramic layers bound by layer of adhesive with fiber mat between them, product being bound by second layer of adhesive to metal-plastic-metal laminate
- AU2002101029B which discloses a composite tile material.
- ES1058248U which discloses a floor and wall covering element.
- EP1555119 which discloses a multi-layer panel.

Therefore, once again, in order to overcome the limitations of these thin porcelain sheets, we develop a laminate such as the one object of the present invention, producing as a result an assembly with the outer appearance of porcelain stoneware, but being much lighter and which can be manufactured in greater dimensions with a cheaper manufacturing process and an increase in its thermal and sound insulation, as well as improving its flexural strength.

### DESCRIPTION OF THE INVENTION

The object of the invention is a porcelain laminate in which at least one of the sheets is performed with porcelain stoneware, and having at least one other sheet or laminate that could be called the base or support sheet.

The thickness of the sheet of porcelain stoneware is comprised between 2 mm and up to 7 mm. The thickness of the porcelain stonewares when used by themselves are about 10 to 15 mm.

The material of the core can be varied, and the following may be used:
- Medium density fibreboard (MDF)
- Chipboard
- High-density foam
- Polyethylene, or polypropylene, or ABS or PVC foam.
- Methacrylate
- High pressure laminates (HPL)
- Phenolic plywood
- Metallic sheet of aluminium or steel

Any other sheet of any convenient nature may be used in combination with said base or support sheets in order to achieve any specific purpose. Therefore, it is possible to use an elastomer or rubber or EDPM sheet in order to provide the laminate with soundproof properties, that is, this would improve the sound insulation as well as the flexibility of the laminate.

The different support sheets and their thickness will be chosen depending on the intended purposes. Therefore, if we intend to provide the laminate with a certain flexural strength without causing breakage, we could use the porcelain sheet coupled to a polyethylene base or support sheet.

If the porcelain sheet should be coupled to a wooden base or support sheet, either plywood or MDF, this could be used as a raised access floor.

The metallic sheet on the free side of the base or support sheet intends to make the laminate flatter.

This metallic coating sheet reinforces the structural characteristics of the laminate, which could then be used as flooring in trains, with certain structural features.

If you would like to improve the set that the laminate can achieve, you could add to the assembly a foam sheet with a thickness between 20 to 70 mm, coupled to the metallic sheet.

The support sheet is a laminate formed by several sandwiched sheets that are formed by a core that could be any of the elements mentioned above (MDF, chipboard, foam, polyethylene, methacrylate, high pressure laminate or phenolic plywood), laminated on both sides by two metallic sheets, the materials and thickness of the metallic laminates on each side of the core not having to be the same.

It is also possible to use as a material for the laminate core a honeycomb-like material, formed by cells that can be metallic, in aluminium or steel, or made in plastic, synthetic or cardboard, also having metallic laminates on both sides.

In another alternative embodiment, not according to the invention, it is possible to use as a support sheet a laminate formed by a sheet of silicates or asbestos cement with metallic laminates on at least one of the sides. The lamination of silicates and asbestos cement is necessary, since using these elements without laminating would make them very fragile.

Another alternative embodiment, not according to the invention, would be to start from a sheet of porcelain stoneware onto which a base has been fixed that can be any of amongst the elements (MDF, chipboard, foam, polyethylene, methacrylate, high pressure laminate HPL or phenolic plywood), or for example from birch, and adding another sheet of porcelain stoneware, or quartz silica, which would be used for example in the manufacture of partition walls.

The thickness of the base or support sheets may vary depending on the technical and aesthetic effects intended. Therefore, the different thicknesses for the different sheets could fall in the following ranges:
- Polyethylene, or polypropylene, or ABS or PVC foam, could have a thickness of 2 to 20 mm.
- MDF from 4 or 5 mm up to 30 mm, when a decorative effect is intended.
- High density foams could range from a minimum of 6 mm up to a maximum of 70 to 80 mm.
- Methacrylate between 2 to 20 mm.
- High pressure laminate (HPL) could have a thickness of between 1 to 30 mm.
- Phenolic plywood boards between 2 to 50 mm.
- The metallic sheet of aluminium or steel, which for aluminium could have a thickness of 0.4 to 3 mm and for steel of 0.5 to 3 mm.
- Chipboard could have a thickness of 4 to 30 mm.

Therefore, as a result of the combination described above, we obtain a laminate that has on its outer side a porcelanic layer with a thickness between 2 to 7 mm, coupled to a base or support layer that allows obtaining the following advantages.
- On the outside the laminate has the characteristic properties of porcelain stoneware, i. e. high resistance to corrosion, abrasion, chemical attacks, very low moisture absorption, very good resistance to sudden changes in temperature, impact and wear, as well as being a very hygienic material, since it has been cured at a temperature above 1000°C and is hardly porous.
- The laminate clearly has lower manufacturing costs than a porcelain plate of the same thickness as that used, of between 10 to 15 mm.
- The laminate improves its flexural strength.
- The laminate improves the levels of thermal and sound insulation. The sound insulation is specially improved when combined with rubber or EDPM.
- Since the laminate only has a thin layer of the porcelain sheet it can be machined manually with specialised digital control tools, such as those used for wood or metal.
- The laminate improves the capacity for impact absorption, being even better than Silestone^{®}.

The laminate obtained even has some advantages compared to materials such as Silestone^{®}. Silestone^{®} is a material that is difficult to machine, is fragile against impact and on which hot bodies may leave a mark.

In order to obtain a laminate such as the one object of the invention we have developed a procedure that allows obtaining said laminate formed by a thin sheet of porcelain stoneware of about 2 to 7 mm coupled to at least a base or support sheet, the procedure having the following steps:
a) Cleaning the porcelain stoneware by blowing, cleaning brushes and aspiration on the side on which the base or support sheet is to be fixed.
b) Prior treatment of the base or support sheet, which will depend on the nature of said base or support sheet.
   If we are using a polyethylene sheet as a base sheet, the side of the base or support sheet to which it will be fixed can be treated by
   - Crown treatment.
   - Treatment by torching.
c) Application on the side of the base or support sheet of a two-component polyurethane glue or "PUR" glue.
d) Adhering the porcelanic sheet to the base or support sheet by gradually applied pressure. The pressure to be applied will depend on the nature of the base or support sheet:
   - If the base or support sheet is polyethylene, the pressure to be applied will be of about 15 to 20 kg/cm2
   - If the base or support sheet is rubber, the pressure to be applied will be of about 30 kg/cm2.
   - If the base or support sheet is high-density foam, the pressure to be applied will be of about 5 to 7 kg/cm2.
   - If the base or support sheet is methacrylate, the pressure to be applied will be of about 15 to 20 kg/cm2.
   - If the base or support sheet is MDF wood, the pressure to be applied will be of about 15 to 25 kg/cm2.
   The rollers used to apply pressure on the porcelanic sheet are grade 60 hardness rollers, so as not to damage the porcelain stoneware.
e) The laminate assembly is left to rest for 3 or 4 days, preferably under pressure, using a metal sheet or plate of the same size as the laminate obtained, for example.

As the laminate has a metallic sheet or coating fixed to the base or support sheet on its free side, this metallic sheet is subjected to the following process before being adhered to the porcelanic sheet or the base or support sheet:
- Scraping of the metallic sheets, with a depth of 60 to 120 microns, performed unidirectionally and in a longitudinal sense, so that as well as cleaning the surface to be adhered to the central core from fat, oils and dirt, one of the sides of the metal sheet is provided with roughness. The scraping is performed with an adequate grain for the metallic sheets.
- Application of a primer paint, a paint that fixes well on metal, which encloses any possible oxidation, thus preparing the surface for any subsequent application of adhesive. This primer paint will be a paint that is especially suitable for adherence to the plastic materials and glues that will be subsequently used, both two-component polyurethane glues and reactive polyurethane glues.
- Oven drying of the primer paint at temperature between 60-180°C
- Application of a special outdoor adhesive glue that can vary, from using reactive polyurethanes to two-component polyurethanes. The adhesive is applied:
   - With a roller.
   - By spraying.
   - Using a pistol providing spiral threads or strands.

As the sheet or support assembly is a sandwiched laminate with a laminate core on at least one of its sides, the manufacturing process will depend on the nature of the core.

Therefore, if the material used in the support laminate is MDF, chipboard, high-density foam, polyethylene or polypropylene, methacrylate, a high pressure laminate, phenolic plywood, the assembly or laminate, once formed, is adhered directly to the porcelanic sheet.

However, if the support laminate core material is a silicate or asbestos cement, the process is as follows:
- A metallic sheet is adhered to the non-visible side of the porcelain sheet,
- The silicate or asbestos cement sheet is then adhered,
- Finally, another metallic sheet is adhered.

### DESCRIPTION OF THE DRAWINGS

To complete the description made below and to aid a better understanding of its characteristics, the present descriptive memory is accompanied by a set of drawings, the figures of which represent the most significant details of the invention for purposes of illustration only and in a non-limiting sense.
Figure 1 shows a cross-section of the laminate object of the invention.
Figure 2 shows a cross-section of an embodiment in which as well as the sheets shown in Figure 1 it has a metallic sheet or coating adhered on the side that is free from the base or support sheet.
Figure 3 shows a diagram of the steps of the manufacturing process.

### PREFERRED EMBODIMENT OF THE INVENTION

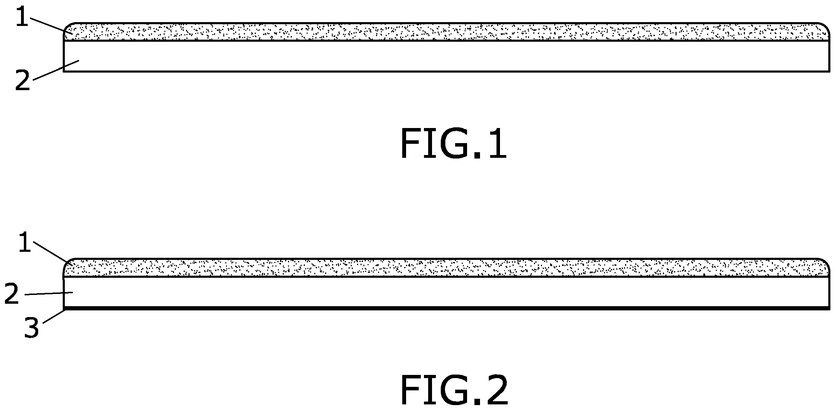

Figure 1 shows a laminate comprising a thin porcelain sheet (1) of a thickness of less than 7 mm, where a reasonable thickness would be between 2 to 7 mm. Said porcelain sheet (1) is adhered onto a base or support sheet (2) in which the support used could be of any nature, preferably using some of the following materials, or a combination thereof:
- Medium density fiberboard (MDF)
- Chipboard
- High-density foam
- Polyethylene, or polypropylene, or ABS or PVC foam.
- Methacrylate
- High pressure laminates (HPL)
- Phenolic plywood
- Metallic sheet of aluminium or steel.

As a result of this configuration, as explained above, there is a synergic effect between the properties of the porcelain sheet (1) and the support sheet (2), achieving a laminate with great resistance to abrasion, wear, the action of chemical agents, which is also very aesthetic, lighter than a porcelain plate as those used to date, and which increases its flexural strength, the level of sound insulation and is also cheaper and easier to machine.

As a result of the properties mentioned above it has multiple applications, from use as a surfacing medium for facades, the building of raised access floors, possible use in building boats, trains, aircraft, etc.

Figure 2 shows an embodiment that complements the one shown above, consisting in manufacturing a laminate that as well as the porcelain sheet (1) and the base or support sheet (2), has a thin metallic sheet or coating (3) between 0.1 and 1 mm thick, with these values understood as a guideline and an example showing that the metallic sheet is actually quite thin.

Said metallic sheet (3) is used as a medium to maintain the levelness of the manufactured laminates. The material used to manufacture the metallic sheet (3) or metallic coating (3) is preferably aluminium, steel or stainless steel. The nature of the metallic sheet used also being non-limiting.

The method for gluing the porcelain sheet (1) to the base or support sheet (2) is as described above, and the gluing of the base or support sheet (2) to the metallic sheet (3) has also been described in the section on the description of the invention.

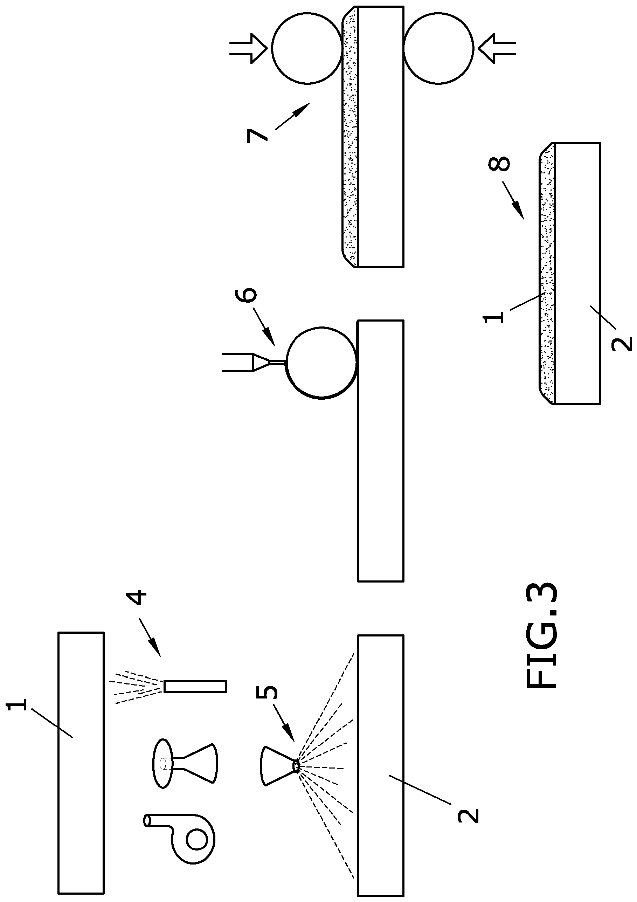

Figure 3 shows the different steps necessary to glue the porcelanic sheet (1) to the base or support sheet (2), consisting in the steps of:
a) Cleaning (4) the porcelain stoneware by blowing, cleaning brushes and aspiration on the side on which the base or support sheet is to be fixed.
b) Prior treatment (5) of the base or support sheet, which will depend on the nature of said base or support sheet.
c) Application (6) on the side of the base or support sheet of a two-component polyurethane glue or "PUR" glue.
d) Adhering (7) the porcelain sheet to the base or support sheet by gradually applied pressure.
   The rollers used to apply pressure on the porcelain sheet are grade 60 hardness rollers, so as not to damage the porcelain stoneware.
e) The laminate assembly is left to rest (8) for 3 or 4 days, preferably under pressure, using a metal sheet or plate of the same size as the laminate obtained, for example.

If we are using a polyethylene sheet as a base sheet, the prior treatment of the base or support sheet on the side it will be glued on can be by
- Crown treatment.
- Treatment by torching.

## Claims

1. A porcelain laminate **characterised in that** it comprises two sheets:
- a sheet of porcelain material with a thickness between 2 to 7 mm glued to
- a sheet serving as a base or support,
where the support sheet is formed by a laminate that has a core of any of the components of the group formed by medium density fibreboard, chipboard, high density foam, polyethylene, polypropylene, ABS, PVC foam, methacrylate, high pressure laminate and phenolic plywood, and which is laminated on both sides by two metallic sheets of aluminium that have a thickness of 0.4 to 3 mm, the two sheets of aluminium not having to have the same thickness.

2. A porcelain laminate according to claim 1, **characterised in that** the thickness of the core of said base or support sheet lies within the following ranges, depending on the nature of said base or support sheet:
- Polyethylene, or polypropylene, or ABS or PVC foam, from 2 to 20 mm.
- medium density fibreboard from 4 mm up to 30 mm, when a decorative effect is intended.
- High density foams from 6 mm up to 80 mm.
- Methacrylate between 2 to 20 mm.
- High pressure laminate between 1 to 30 mm.
- Phenolic plywood boards between 2 to 50 mm.
- Chipboard 4 to 30 mm.

3. A porcelain laminate according to any of the previous claims, **characterised in that** the material used to adhere the sheets is a two-component polyurethane glue or a PUR glue.

4. A manufacturing process for a laminate according to any one of claims 1 to 3, **characterised in that** it comprises the following steps:
- Cleaning the porcelain material by blowing, cleaning brushes and aspiration on the side on which the base or support sheet is to be fixed.
- Prior treatment of the base or support sheet, which will depend on the nature of said base or support sheet.
- Application on the side of the base or support sheet of a two-component polyurethane glue or "PUR" glue.
- Adhering the porcelain sheet to the base or support sheet by gradually applied pressure.
- The laminate assembly is left to rest for 3 or 4 days, preferably under pressure, using a metal sheet or plate of the same size as the laminate obtained, for example.

5. A manufacturing process according to claim 4, **characterised in that** the metallic sheet is subjected to the following procedure before gluing:
- Scraping of the metallic sheets, with a depth of 60 to 120 microns, performed unidirectionally and in a longitudinal sense, so that as well as cleaning the surface to be adhered to the central core from fat, oils and dirt, one of the sides of the metal sheet is provided with roughness, the scraping being performed with an adequate grain for the metallic sheets.
- Application of a primer paint, a paint that fixes well on metal, which encloses any possible oxidation, thus preparing the surface for any subsequent application of adhesive, the primer paint being a paint that is especially suitable for adherence to the plastic materials and glues that will be subsequently used, both two-component polyurethane glues and reactive polyurethane glues.
- Oven drying of the primer paint at a temperature between 60-180°C
- Application of a special outdoor adhesive glue that can vary, from using reactive polyurethanes to two-component polyurethanes, the adhesive being applied:
- With a roller.
- By spraying.
- Using a pistol providing spiral threads or strands.

## Patentansprüche

1. Porzellanlaminat **dadurch gekennzeichnet, dass** es zwei Schichten umfasst:
- eine Schichte aus Porzellanmaterial mit einer Dicke zwischen 2 mm und 7 mm, der geklebt ist auf
- eine Schicht, der als Basis oder Träger dient, wobei die Trägerschicht aus einem Laminat besteht, die einen Kern aus einer der Komponenten der Gruppe aufweist, die mitteldichte Faserplatte, Spanplatte, hochdichtem Schaum, Polyethylen, Polypropylen, ABS, PVC-Schaum, Methacrylat, Hochdrucklaminat und Phenolsperrholz umfasst, und die beidseitig mit zwei Metallschichten aus Aluminium mit einer Dicke von 0,4 mm bis 3 mm laminiert ist, wobei die beiden Aluminiumschichten nicht die gleiche Dicke haben müssen.

2. Porzellanlaminat nach Anspruch 1, **dadurch gekennzeichnet, dass** die Dicke des Kerns der Basis- oder Trägerschicht je nach Art der Basis- oder Trägerschichten innerhalb der folgenden Bereiche liegt:
- Polyethylen, oder Polypropylen, oder ABS, oder PVC-Schaum, von 2 mm bis 20 mm,
- mitteldichte Faserplatten von 4 mm bis 30 mm, wenn ein dekorativer Effekt beabsichtigt ist,
- hochdichtem Schaum von 6 mm bis zu 80 mm,
- Methacrylat zwischen 2 mm und 20 mm,
- Hochdrucklaminat von 1 mm bis 30 mm,
- Phenolsperrholzplatten von 2 mm bis 50 mm,
- Spanplatte von 4 mm bis 30 mm.

3. Porzellanlaminat nach einem der vorhergehenden Ansprüche, **dadurch gekennzeichnet, dass** das zum Verkleben der Schichten verwendete Material ein Zweikomponenten-Polyurethanklebstoff oder ein PUR Klebstoff ist.

4. Verfahren zur Herstellung eines Laminats nach einem der Ansprüche 1 bis 3, **dadurch gekennzeichnet, dass** es die folgenden Schritte umfasst:
- Reinigung des Porzellanmaterials durch Blasen, Reinigungsbürsten und Absaugen auf der Seite, auf die Basis- oder Trägerschicht befestigt werden soll,
- Vorbehandlung der Basis- oder Trägerschicht, die von der Art der Basis- oder Trägerschicht abhängt,
- Auftragen eines Zweikomponenten-Polyurethan-Klebstoffs oder "PUR"-Klebstoffs auf die Seite der Grundlage- oder Trägerschicht,
- Verkleben der Porzellanschicht mit der Grundlage- oder Trägerschicht durch allmählich ausgeübten Druck,
- der Laminatzusammenbau wird 3 oder 4 Tage lang ruhen gelassen, vorzugsweise unter Druck, z. B. mit Hilfe einer Metallschicht oder einer Metallplatte in der gleichen Größe wie das erhaltene Laminat.

5. Herstellungsverfahren nach Anspruch 4, **dadurch gekennzeichnet, dass** die Metallschicht vor dem Verkleben dem folgenden Verfahren unterzogen wird:
- Schaben der Metallschichten mit einer Tiefe von 60 Mikrometern bis 120 Mikrometern, unidirektional und in Längsrichtung, so dass neben der Reinigung der Oberfläche, die an den zentralen Kern geklebt werden soll, von Fetten, Ölen und Schmutz eine der Seiten der Metallschicht mit einer Rauheit versehen wird, wobei das Schaben mit einer für die Metallschichten angemessenen Körnung durchgeführt wird,
- Auftragen einer Grundierfarbe, einer Farbe, die auf dem Metall fixiert, die eine eventuelle Oxidation umfasst und so die Oberfläche für das spätere Auftragen eines Klebstoffs vorbereitet, wobei die Grundierfarbe eine Farbe ist, die besonders geeignet ist, um auf den später verwendeten Kunststoffen und Klebstoffen zu haften, sowohl auf Zweikomponenten-Polyurethanklebstoffen als auch auf reaktiven Polyurethanklebstoffen,
- Trocknen der Grundierfarbe im Ofen bei einer Temperatur von 60°C bis 180°C,
- Auftragen eines speziellen Klebstoffs für den Außenbereich, der von der Verwendung reaktiver Polyurethane bis zu Zweikomponenten-Polyurethanen variieren kann, wobei der Klebstoff aufgetragen wird:
- mit einer Rolle,
- durch Sprühen,
- mit einer Pistole, die spiralförmige Fäden oder Litzen liefert.

## Revendications

1. Stratifié porcelainique **caractérisé en ce qu'**il comprend deux feuilles :
- une feuille de matériau porcelainique d'une épaisseur comprise entre 2 mm et 7 mm collée à
- une feuille servant de base ou de support, ladite feuille de support étant formée par un stratifié, qui a une âme comprenant l'un des composants du groupe formé par les panneaux de fibres de densité moyenne, les panneaux d'agglomérés, les mousses de haute densité, le polyéthylène, le polypropylène, l'ABS, les mousses de PVC, méthacrylate, les stratifiés haute pression et les contreplaqués phénoliques, et qui est stratifié des deux côtés par deux feuilles métalliques d'aluminium ayant une épaisseur de 0,4 mm à 3 mm, lesdites deux feuilles d'aluminium n'ont pas à avoir la même épaisseur.

2. Stratifié porcelainique selon la revendication 1, **caractérisé en ce que** l'épaisseur de ladite feuille de base ou de support se situe dans les plages suivantes, selon la nature de ladite feuille de base ou de support :
- polyéthylène, ou polypropylène, ou ABS ou mousse de PVC, de 2 mm à 20 mm,
- panneau de fibres de moyenne densité de 4 mm à 30 mm, lorsqu'un effet décoratif est recherché,
- mousses haute densité de 6 mm à 80 mm,
- méthacrylate de 2 mm à 20 mm,
- stratifié haute pression entre 1 mm et 30 mm,
- panneaux de contreplaqué phénolique entre 2 mm à 50 mm,
- panneau d'aggloméré de 4 mm à 30 mm.

3. Stratifié porcelainique selon l'une quelconque des revendications précédentes, **caractérisé en ce que** le matériau utilisé pour faire adhérer lesdites feuilles est une colle polyuréthane à deux composants ou une colle PUR.

4. Procédé de fabrication d'un stratifié selon l'une quelconque des revendications 1 à 3, **caractérisé en ce qu'**il comprend les étapes suivantes :
- nettoyage dudit matériau porcelainique par soufflage, brosses de nettoyage et aspiration sur la face sur laquelle ladite feuille de base ou de support doit être fixée,
- traitement préalable de ladite feuille de base ou de support, qui dépendra de la nature de ladite feuille de base ou de support,
- application sur le côté de ladite feuille de base ou de support d'une colle polyuréthane à deux composants ou colle "PUR",
- collage de ladite feuille porcelainique sur ladite feuille de base ou de support par pression progressive,
- l'ensemble stratifié est laissé au repos pendant 3 ou 4 jours, de préférence sous pression, en utilisant une feuille ou une plaque de métal de la même taille que ledit stratifié obtenu, par exemple.

5. Procédé de fabrication selon la revendication 4, **caractérisé en ce que** la feuille métallique est soumise à la procédure suivante avant le collage :
- grattage desdites feuilles métalliques, avec une profondeur de 60 microns à 120 microns, effectué de manière unidirectionnelle et dans le sens longitudinal, de sorte que, tout en nettoyant la surface à coller sur ladite âme centrale de la graisse, des huiles et de la saleté, l'un des côtés de ladite feuille métallique est pourvu de rugosité, ledit grattage étant effectué avec un grain adéquat pour lesdites feuilles métalliques,
- application d'une peinture d'apprêt, une peinture qui fixe le métal, qui comporte une éventuelle oxydation, préparant ainsi ladite surface pour une éventuelle application ultérieure d'adhésif, ladite peinture d'apprêt étant une peinture particulièrement adaptée à l'adhérence des matières plastiques et des colles qui seront ensuite utilisées, lesdites colles polyuréthanes à deux composants et lesdites colles polyuréthanes réactives,
- séchage au four de ladite peinture d'apprêt à une température comprise entre 60°C et 180°C,
- application d'une colle adhésive spéciale pour l'extérieur qui peut varier, de l'utilisation de polyuréthanes réactifs à des polyuréthanes à deux composants, ladite colle étant appliquée :
- au rouleau,
- par pulvérisation
- à l'aide d'un pistolet fournissant des fils ou des brins en spirale.
